# EUROPEAN PATENT APPLICATION

(11) **EP 4 835 714 A2**
(43) Date of publication of application: **04.11.2026**
(21) Application number: 25741699.0
(22) Date of filing: 07.01.2025
(51) Int. Cl.: G06F 21/64

(54) **VERIFICATION STRUCTURE UPDATING METHOD, DATA VERIFICATION METHOD, DEVICE, MEDIUM AND PRODUCT**

(30) Priority: 16.01.2024 CN 202410066179
(71) Applicant: Cloud Intelligence Assets Holding (Singapore) Private Limited, Singapore 189554 (SG)
(72) Inventor: CHEN, Jiqiang, Hangzhou, Zhejiang 310030 (CN); WANG, Sheng, Singapore 189554 (SG); LI, Feifei, Hangzhou, Zhejiang 310030 (CN)
(74) Representative: 2SPL Patentanwälte PartG mbB
(86) International application number: PCT/IB2025/050133
(87) International publication number: WO 2025/153909

(57) **Abstract**

Provided in the present description are a verification structure update method, a data verification method, an electronic device, a storage medium, and a product. The method comprises: in response to an update instruction from a first client for a tuple in a data table, acquiring a hash value of the updated tuple, recording the hash value of the updated tuple in a log, and synchronizing the log to a second client having a query requirement for the data table; in response to the log meeting an updating condition, using the hash value of each tuple recorded in the log to update a leaf node corresponding to the tuple in a tree, updating non-leaf nodes in the tree on the basis of hash values recorded by the updated leaf nodes, and synchronizing root hash values recorded by root node of the updated tree and an updated log to the second client having the query requirement on the data table.

## Description

### TECHNICAL FIELD

One or more embodiments of the present disclosure relate to the field of database technology, and in particular, to a method of updating a verification structure, a data verification method based on a verification structure, an electronic device, a computer-readable storage medium, and a computer program product.

### BACKGROUND

In the related art, a database service provider may provide various database services for different users based on a database held by the database service provider, such as data query services and data update services. In order to enable a client to effectively verify the correctness of data returned by a server of the database service provider, when responding to a data query request from the client, the server returns a query result and a query result proof to the client, and the client verifies the correctness of the query result based on the query result proof and a verification credential obtained in advance.

The verification credential may be obtained based on an authenticated data structure (ADS) maintained by the server. When the server updates data in a database managed by the server based on a data update request sent by a client, the server also needs to update the ADS accordingly; the server synchronizes an updated verification credential updated based on the updated ADS to all clients, so that the clients can verify the latest updated data the clients have queried, based on the updated verification credential.

However, in the related art, the resources consumed for updating the ADS are relatively large. In order to ensure that the data update performance and the data query performance of the database are not affected, an off-path update approach for the ADS is generally adopted. However, this approach results in an inability to ensure the real-time nature of the verification credential, and thus an inability to perform trusted verification on the latest updated data queried.

### SUMMARY

In view of this, one or more embodiments of the present disclosure provide a method of updating a verification structure, a data verification method based on a verification structure, an electronic device, a computer-readable storage medium, and a computer program product.

To achieve the above objectives, one or more embodiments of the present disclosure provide the following technical solutions.

According to a first aspect of one or more embodiments of the present disclosure, a method of updating a verification structure is provided, where the verification structure is used for performing data verification on a data table in a database; the verification structure includes a tree and a log; each leaf node of the tree is used to record a hash value of a corresponding tuple in the data table, and a hash value recorded in a non-leaf node of the tree is obtained by aggregating hash values recorded in child nodes of the non-leaf node; wherein a root hash value recorded in a root node of the tree and the log are used as a verification credential and synchronized to a second client that has a query requirement for the data table; the method includes:
in response to an update instruction from a first client for a tuple in the data table, obtaining a hash value of the updated tuple, recording the hash value of the updated tuple in the log, and synchronizing the log to the second client having a query requirement for the data table;
in response to the log meeting an update condition, updating, by using hash values of each tuple recorded in the log, leaf nodes in the tree corresponding to the tuples, and updating non-leaf nodes in the tree based on hash values recorded in the updated leaf nodes, to obtain an updated tree and an updated log in which the recorded hash values are updated into the tree, and synchronizing a root hash value recorded in a root node of the updated tree and the updated log to the second client that has a query requirement for the data table.

According to a second aspect of one or more embodiments of the present disclosure, a data verification method based on a verification structure is provided, where the verification structure is obtained based on the method of updating the verification structure according to the first aspect; the method includes:
in response to a query instruction from a second client for a data table in a database, querying whether a hash value of a target tuple indicated by the query instruction is recorded in a log corresponding to the data table; if so, returning the hash value of the target tuple recorded in the log to the second client, so that the second client performs data verification on the target tuple based on the hash value of the target tuple and the log stored locally at the second client; if not, querying a tree corresponding to the data table, determining a proof path of a leaf node corresponding to the target tuple in the tree, and returning the proof path to the second client, so that the second client performs data verification based on the proof path and a root hash value stored locally at the second client.

According to a third aspect of the embodiments of the present disclosure, a data verification method based on a verification structure is provided, applied to a second client, wherein a verification credential held by the second client is obtained based on the method of updating the verification structure according to the first aspect, the verification credential includes a root hash value and a log corresponding to a data table in a database, and the log records a hash value of at least one tuple in the data table; the method includes:
sending a query instruction for the data table to the database;
in response to the database returning a hash value of a target tuple indicated by the query instruction, performing data verification on the target tuple based on the hash value of the target tuple and the log stored locally at the second client;
in response to the database returning a proof path of the target tuple indicated by the query instruction, performing data verification based on the proof path and the root hash value stored locally at the second client.

According to a fourth aspect of the embodiments of the present disclosure, an electronic device is provided, including: a processor; a memory configured to store instructions executable by the processor; where the processor is configured to, when executing the executable instructions, implement the method according to the first aspect.

According to a fifth aspect of the embodiments of the present disclosure, a computer-readable storage medium is provided, on which a computer program is stored, where when the computer program is executed by a processor, the steps of the method according to any one of the preceding aspects are implemented.

According to a sixth aspect of the embodiments of the present disclosure, a computer program product is provided, including a computer program, where when the computer program is executed by a processor, the steps of the method according to any one of the preceding aspects are implemented.

The technical solutions provided by the embodiments of the present disclosure may include the following beneficial effects.

An embodiment of the present disclosure first provides a verification structure, where the verification structure is used for performing data verification on a data table in a database; the verification structure includes a tree and a log; each leaf node of the tree is used to record a hash value of a corresponding tuple in the data table, and a hash value recorded in a non-leaf node of the tree is obtained by aggregating hash values recorded in child nodes of the non-leaf node; where a root hash value recorded in a root node of the tree and the log are used as a verification credential and synchronized to a second client that has a query requirement for the data table.

The method of updating the verification structure provided by this embodiment uses the root hash value and the log as the verification credential, so that during the update process of the verification structure, upon receiving an update instruction, the log in the verification structure is updated in real time and synchronized to the client that has a query requirement for the data table, thereby ensuring the real-time nature of data verification; and only when the update condition is satisfied are all hash values recorded in the log updated into the tree at once, which avoids the resource consumption problem caused by real-time update of the tree, provides better performance and response speed in a data query scenario, and at the same time maintains the efficiency of data updates.

The data verification method provided by this embodiment first accesses the log and then the tree during a data query; if the hash value of the target tuple indicated by the query instruction is recorded in the log, it is directly returned to the second client, which is beneficial to improving query efficiency; for a target tuple not recorded in the log, a proof path is obtained by using the tree in the verification structure and returned to the second client for data verification; and the immediate updating of the above-described verification structure enables data verification of the latest updated data in a data query scenario, providing better performance and response speed in the data query scenario.

It should be understood that the foregoing general description and the following detailed description are merely exemplary and explanatory, and do not limit the present disclosure.

### BRIEF DESCRIPTION OF DRAWINGS

FIG. 1 is a schematic diagram of a scenario according to an exemplary embodiment.
FIG. 2 is a flowchart of a method of updating a verification structure according to an exemplary embodiment.
FIG. 3 is a flowchart of a data verification method based on a verification structure according to an exemplary embodiment.
FIG. 4 is a schematic diagram of a verification structure before and after an update according to an exemplary embodiment.
FIG. 5 is a schematic diagram of a data table based on Multi-Version Concurrency Control (MVCC) according to an exemplary embodiment.
FIG. 6 is a schematic diagram of a Merkle B-tree according to an exemplary embodiment.
FIG. 7 is a flowchart of another data verification method based on a verification structure according to an exemplary embodiment.
FIG. 8 is a schematic structural diagram of an electronic device according to an exemplary embodiment.

### DETAILED DESCRIPTION

Reference will now be made in detail to exemplary embodiments, examples of which are illustrated in the accompanying drawings. Where the following description refers to the drawings, the same numerals in different drawings represent the same or similar elements unless otherwise indicated. The implementations described in the following exemplary embodiments do not represent all implementations consistent with one or more embodiments of the present disclosure. Rather, they are merely examples of apparatuses and methods consistent with some aspects of one or more embodiments of the present disclosure as recited in the appended claims.

It should be noted that in other embodiments, the steps of the corresponding methods are not necessarily performed in the order shown and described in the present disclosure. In some other embodiments, the method may include more or fewer steps than those described in the present disclosure. Furthermore, a single step described in the present disclosure may be decomposed into multiple steps for description in other embodiments; and multiple steps described in the present disclosure may be combined into a single step for description in other embodiments.

In the related art, a database service provider may provide various database services for different users based on a database held by the database service provider, such as data query services and data update services. In order to enable a client to effectively verify the correctness of data returned by a server of the database service provider, when responding to a data query request from the client, the server returns a query result and a query result proof to the client, and the client verifies the correctness of the query result based on the query result proof and a verification credential obtained in advance.

In an example, a data owner may delegate database management to an outsourced database service provider, so that the outsourced database service provider may provide various database services for different users. Alternatively, a database service provider may provide various database services for different users based on a database established by itself. The present embodiment imposes no limitation in this regard.

The verification credential may be obtained based on an ADS maintained by the server. When the server updates data in a database managed by the server based on a data update request sent by a client, the server also needs to update the ADS accordingly; then the server synchronizes an updated verification credential updated based on the updated ADS to all clients, so that the clients can verify, the latest updated data queried, based on the updated verification credential.

A Merkle tree and a Merkle B-tree are used as examples of the ADS for illustration.

The Merkle tree is used to record the current data state of a database table. In a general sense, it is a way of hashing a large collection of aggregated data units. Each leaf node corresponds to a hash of a data unit (i.e., a tuple in the data table), and each non-leaf node has its hash value computed by aggregating hashes of its child nodes. The same process is repeated until the hash value of the root node is computed.

A B-tree is the most commonly used indexing structure for database table indexing in databases, and is a self-balancing tree that maintains data in sorted order. This data structure allows data search, sequential access, insertion, and deletion operations to all be completed in logarithmic time.

A Merkle B-tree (MBT) is a data structure combining a Merkle tree with a B-tree, which can both record and represent the current data state and serve as a query index to replace a conventional B-tree index.

Each leaf node in the Merkle tree or the Merkle B-tree is used to record the hash value of each tuple in the data table, and the hash value recorded in a non-leaf node in the tree is obtained by aggregating the hash values recorded in its child nodes. The same process is repeated until the root hash value of the root node is computed. The verification credential obtained by each client is the root hash value RootHash of the root node.

When the server updates data in a database managed by the server based on a data update request sent by a client, for example, when a tuple in the database table is updated, the hash value of the tuple needs to be recalculated, the leaf node corresponding to the tuple in the Merkle tree is updated using the hash value of the tuple, and then the hash value of the parent node of the leaf node is updated. The same process is repeated until the root hash value of the root node is updated, and the updated root hash value RootHash of the root node is synchronized as the latest verification credential to each client that has a query requirement for the data table.

When responding to a data query request from a client, the server returns a query result and a query result proof to the client. For example, the query result is a tuple, and the query result proof is a proof path ProofPath from the leaf node corresponding to the tuple in the Merkle tree to the root node. After receiving the query result and the proof path ProofPath, the client computes a hash value based on the query result, and then performs hash aggregation and backward deduction in combination with the proof path ProofPath to obtain a final computation result. If the final computation result is the same as the root hash value RootHash of the root node held by the client, it indicates that the data is trustworthy and has not been modified; conversely, it indicates that the data has been modified.

Since database query scenarios have high requirements on the latency for update queries, and real-time updating of the ADS (such as the Merkle tree and the Merkle B-tree described above) consumes a large amount of resources, an off-path update approach for the ADS is typically adopted to ensure that the data update performance and data query performance of the database are not affected. However, the problem caused by this approach is that there is no way to ensure the real-time nature of the verification credential determined based on the ADS, and thus there is no way to perform trusted verification on the latest updated data queried. Clearly, for some sensitive and important data scenarios (for example, financial asset data, platform user permission data), the inability to achieve real-time verification is unacceptable.

Based on this, an embodiment of the present disclosure provides a method of updating a verification structure and a data verification method based on a verification structure, aimed at solving the problem of real-time verification of data accuracy in database query scenarios.

First, a verification structure is provided, where the verification structure is used to perform data verification on a data table in a database; the verification structure includes a tree and a log; each leaf node in the tree is used to record the hash value of each tuple in the data table, and the hash value recorded in each non-leaf node in the tree is obtained by aggregating the hash values recorded in its child nodes; where the root hash value recorded in the root node of the tree and the log serve as a verification credential, which is synchronized to a second client that has a query requirement for the data table.

By using the root hash value and the log as the verification credential, upon receiving an update instruction, during the update process of the verification structure, the log in the verification structure may be immediately updated and synchronized to the client that has a query requirement for the data table, thereby ensuring the real-time nature of data verification; and the hash values recorded in the log are all updated to the tree in a batch only when an update condition is met, avoiding the resource overhead caused by real-time updating of the tree, providing better performance and response speed in data query scenarios, and maintaining the efficiency of data updates.

During data querying, the log is accessed first and then the tree is accessed. If the hash value of the target tuple indicated by the query instruction is recorded in the log, it may be directly returned to the second client, which is beneficial to improving query efficiency; for a target tuple not recorded in the log, a proof path is obtained using the tree in the verification structure and returned to the second client for data verification. Furthermore, the immediate updating of the verification structure described above enables data verification of the latest updated data in data query scenarios, providing better performance and response speed in data query scenarios.

An embodiment of the present disclosure provides a method of updating a verification structure and a data verification method based on a verification structure, which may be executed by a server. Exemplarily, the server assumes the role of managing a database, and is responsible for processing requests from clients and performing corresponding operations, as well as processing various database operations such as data insertion, update, deletion, and query. The method of updating a verification structure and the data verification method based on a verification structure are applied in the server to enhance the data management capability of the server for the database, ensuring that the data in the database is always in a correct and complete state and providing trusted data verification services.

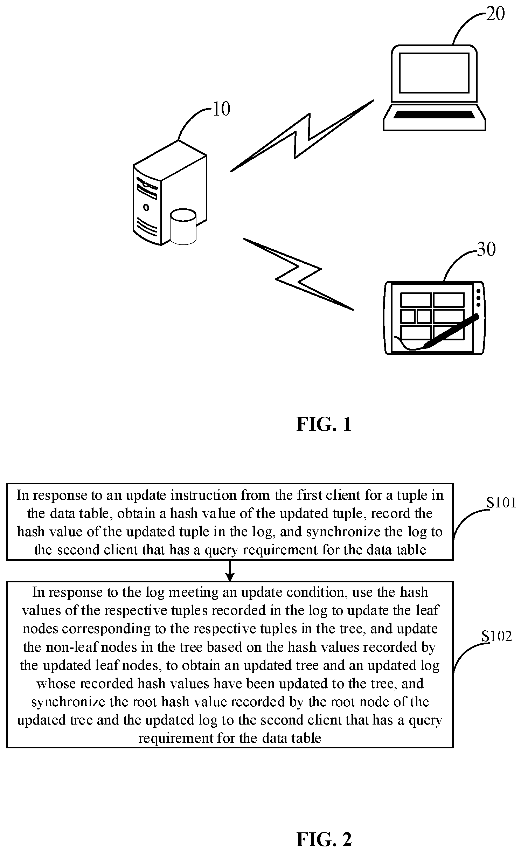

Exemplarily, referring to FIG. 1, a server 10 is configured to manage a database, and the server 10 is communicatively connected to a first client 20 and a second client 30. The first client 20 refers to a client that has a data update requirement; the second client 30 refers to a client that has a data query requirement.

In some possible application scenarios, the first client 20 and the second client 30 are different clients. For example, the first client 20 is a client corresponding to a data provider, and the second client 30 is a client corresponding to a data consumer. In other possible application scenarios, the first client 20 and the second client 30 are the same client.

In some embodiments, referring to FIG. 2, FIG. 2 is a schematic flowchart illustrating a method of updating a verification structure provided by an embodiment of the present disclosure. The method may be executed by a server responsible for managing a database. The verification structure is used to perform data verification on a data table in the database. The verification structure includes a tree and a log. Each leaf node in the tree is used to record the hash value of each tuple in the data table, and the hash value recorded in each non-leaf node in the tree is obtained by aggregating the hash values recorded in its child nodes; where the root hash value recorded in the root node of the tree and the log serve as a verification credential, which is synchronized to a second client that has a query requirement for the data table. The method includes S101 to S102.

In S101, in response to an update instruction from the first client for a tuple in the data table, a hash value of the updated tuple is obtained, the hash value of the updated tuple is recorded in the log, and the log is synchronized to the second client that has a query requirement for the data table.

Exemplarily, since the hash value of the updated tuple is recorded in the log, that is, the log has changed, the log needs to be synchronized to the second client that has a query requirement for the data table after the hash value of the updated tuple is recorded in the log, to ensure the accuracy of data verification during the data query phase.

In S102, in response to the log meeting an update condition, the leaf nodes corresponding to the respective tuples in the tree are updated using the hash values of the respective tuples recorded in the log, and the non-leaf nodes in the tree are updated based on the hash values recorded in the updated leaf nodes, to obtain an updated tree and an updated log in which the recorded hash values have been updated to the tree, and the root hash value recorded in the root node of the updated tree and the updated log are synchronized to the second client that has a query requirement for the data table.

Exemplarily, when the log meets the update condition, the server batch-updates the hash values of the respective tuples recorded in the log to the tree, and then releases the storage space corresponding to the log. That is, both the tree and the log have changed, so the server needs to synchronize the root hash value recorded in the root node of the updated tree and the updated log to the second client that has a query requirement for the data table, to ensure the accuracy of data verification during the data query phase.

In the present embodiment, by using the root hash value and the log as the verification credential, upon receiving an update instruction, the log in the verification structure may be immediately updated and synchronized to the clients that have a query requirement for the data table, thereby ensuring the real-time nature of data verification; and all hash values recorded in the log are updated into the tree in a batch only when the update condition is met, avoiding the resource overhead caused by real-time updating of the tree, providing better performance and response speed in data query scenarios, and maintaining the efficiency of data updates.

It should be noted that each data table in the database has a verification structure corresponding thereto in a one-to-one manner, where the verification structure includes a tree and a log; each leaf node in the tree is used to record the hash value of each tuple in the data table, and the hash value recorded in each non-leaf node in the tree is obtained by aggregating the hash values recorded in its child nodes; the log is used to record the hash value of at least one tuple to be updated into the tree. A tuple is a basic concept in a relational database, where a relation is a table, each row in the table (i.e., each record in the database) is a tuple, and each column is an attribute.

Exemplarily, the tree in the verification structure includes a Merkle tree.

Exemplarily, the update condition includes: the number of hash values recorded in the log reaching a preset threshold; or the storage capacity of the log being full; or a preset update time point being reached, etc. The present embodiment imposes no limitation in this regard.

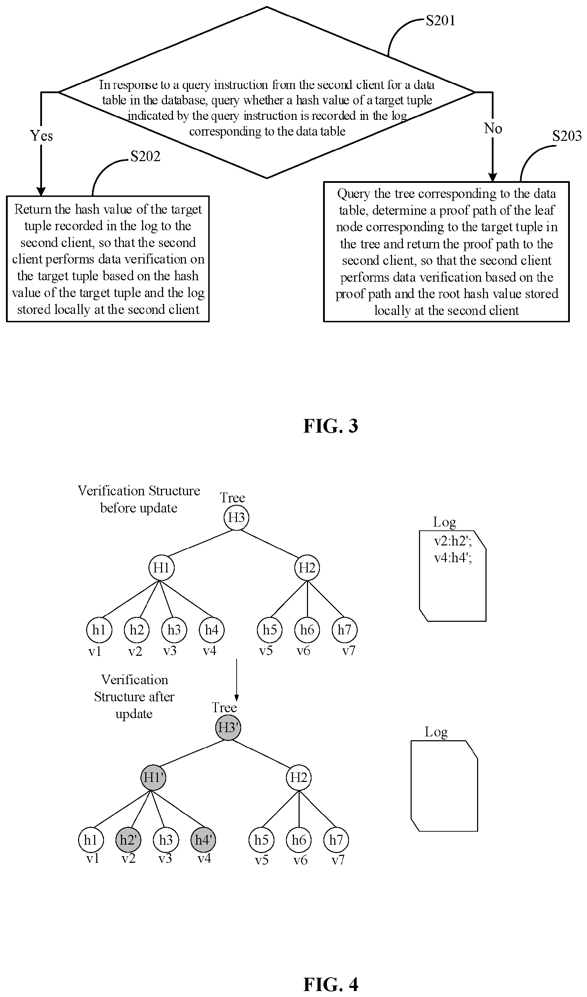

In some embodiments, referring to FIG. 3, an embodiment of the present disclosure further provides a data verification method based on a verification structure, where the verification structure is obtained based on the method of updating the verification structure described above. The method includes S201 to S203.

In S201, in response to a query instruction from the second client for a data table in the database, it is queried whether a hash value of a target tuple indicated by the query instruction is recorded in the log corresponding to the data table.

In S202, if yes, the hash value of the target tuple recorded in the log is returned to the second client, so that the second client performs data verification on the target tuple based on the hash value of the target tuple and the log stored locally at the second client.

In S203, if not, the tree corresponding to the data table is queried, a proof path of the leaf node corresponding to the target tuple in the tree is determined and returned to the second client, so that the second client performs data verification based on the proof path and the root hash value stored locally at the second client.

In the present embodiment, during data querying, the log may be accessed first and then the tree may be accessed. If the hash value of the target tuple indicated by the query instruction is recorded in the log, it may be directly returned to the second client, which is beneficial to improving query efficiency; for a target tuple not recorded in the log, a proof path may be obtained using the tree in the verification structure and returned to the second client for data verification. Furthermore, the immediate update of the verification structure described above enables data verification of the latest updated data in data query scenarios, providing better performance and response speed in data query scenarios.

Exemplarily, when returning the hash value of the target tuple or the proof path corresponding to the target tuple, the server also returns the target tuple queried from the database together therewith.

When the server returns the target tuple and the hash value of the target tuple recorded in the log to the second client, the second client may query whether the hash value of the target tuple recorded in the log stored locally at the second client is consistent with the hash value of the target tuple returned by the server. If yes, the data verification passes, and the target tuple returned together by the server is trustworthy and has not been modified; if not, the data verification does not pass, indicating that the target tuple returned together by the server has been modified.

When the server returns the target tuple and the proof path corresponding to the target tuple to the second client, the second client may compute a hash value based on the target tuple, and perform hash aggregation and backward deduction based on the computed hash value and the proof path to obtain a final computation result. If the final computation result is the same as the root hash value held by the client, the data verification passes, and the target tuple returned together by the server is trustworthy and has not been modified; conversely, the data verification does not pass, indicating that the target tuple returned together by the server has been modified.

In some embodiments, to accelerate traversal of the log during data querying, a Bloom filter (BF) is built into the log. A BF is a probabilistic data structure used to determine whether an element is in a set. Its core idea is to use multiple hash functions and a binary vector to represent elements in the set. The Bloom filter is characterized in that it indicates that an element is "definitely not in the filter" or "possibly in the filter ". The advantages of the Bloom filter are high space efficiency and fast query time, making it particularly suitable for handling existence detection of large-scale data.

During updating of the verification structure, after the hash value of the updated tuple is recorded in the log, the server updates the Bloom filter using the hash value of the updated tuple. Then during data querying, the server may query whether the hash value of the target tuple is recorded in the log by using the Bloom filter in the log; if the Bloom filter indicates that the hash value of the target tuple is not recorded in the log, the step of querying the tree is performed; otherwise, the hash values recorded in the log are traversed until the hash value of the target tuple is found. The present embodiment improves data query efficiency by using the Bloom filter.

Exemplarily, to further accelerate traversal, the log includes at least two storage units, and a Bloom filter may be built into each storage unit. During updating of the verification structure, after the hash value of the updated tuple is recorded in one of the storage units in the log, the Bloom filter of the storage unit may be updated using the hash value of the updated tuple. Then during data querying, the server first traverses the Bloom filters of the respective storage units in the log until the Bloom filter of one of the storage units indicates that the hash value of the target tuple may be stored in its respective storage unit, or all Bloom filters indicate that the hash value of the target tuple is not recorded in their respective storage units.

In some embodiments, for S102 in FIG. 2, when the log meets an update condition, the server batch-updates the hash values of the tuples recorded in the log into the tree, and then releases the storage space corresponding to the log, so that the log can continue to record new hash values.

Exemplarily, referring to FIG. 4, assume that a data table exists, the data table comprising a total of 7 rows of records, namely v1, v2, v3, v4, v5, v6, and v7, that is, 7 tuples. The data table corresponds to a verification structure, which includes a tree and a log. Leaf nodes of the tree record hash values h1 to h7 respectively corresponding to v1 to v7. The first client updates tuples v2 and v4 during a data update process, assuming that certain attribute values in tuples v2 and v4 is updated. The log records a hash value h2' corresponding to the updated tuple v2 and a hash value h4' corresponding to the updated tuple v4. When the number of hash values recorded in the log reaches a preset threshold (for example, the preset threshold is 2), the hash value h2' corresponding to the updated tuple v2 and the hash value h4' corresponding to the updated tuple v4 recorded in the log are batch-updated into the tree, and relevant non-leaf nodes need to be updated accordingly, thereby obtaining an updated verification structure, where gray nodes in the tree of the updated verification structure are nodes whose hash values need to be updated.

Exemplarily, to reduce the overall update overhead of the tree, in the process of updating the hash values recorded in the log into the tree, if the log records a plurality of hash values for a same tuple, the server uses the most recently recorded hash value among the plurality of hash values to update the leaf node corresponding to the tuple in the tree; that is to say, only the most recently recorded hash value needs to be written back to the leaf node corresponding to the tuple in the tree, which reduces the update overhead caused by repeatedly writing a plurality of hash values of the same tuple to the same leaf node, and also helps improve the update efficiency.

In some embodiments, the database adopts a Multi-Version Concurrency Control (MVCC) mechanism to support transactions. Each transaction corresponds to a unique transaction identifier, and the transactions include query transactions and update transactions, where the update transactions include update instructions for the data table; and the query transactions include query instructions for the data table.

MVCC is a database concurrency control mechanism that supports the execution of concurrent transactions by maintaining multiple versions of data in a database. When reading data, each transaction can see a visible, consistent database state, without being affected by other transactions.

The core idea of MVCC is to create an independent transaction identifier for each transaction and use the transaction identifier to determine data visibility for the transaction. The transaction identifier is an incrementing number. Specifically, when a transaction begins, it is assigned a unique transaction identifier. When reading data, the transaction can only see data committed before its transaction identifier. If another transaction modifies or deletes a data item and the transaction identifier of that transaction is greater than the transaction identifier of the current transaction, the current transaction cannot see the results of such modification or deletion operations.

The database creates a new version for each modification operation and retains the old version of data in history records. Each version is associated with the transaction identifier of the transaction that performed the modification operation. That is to say, each tuple in the data table corresponds to at least one version, and each version has a transaction identifier range indicating the transactions served by the tuple of that version. The transaction identifier range is jointly determined according to the transaction identifiers of both the update transaction that updates the tuple to this version and the update transaction that updates the tuple to the next version. In other words, the minimum transaction identifier served by each version is the transaction identifier of the update transaction that updates the tuple to that version, and the maximum transaction identifier served is less than the transaction identifier of the update transaction that updates the tuple to the next version.

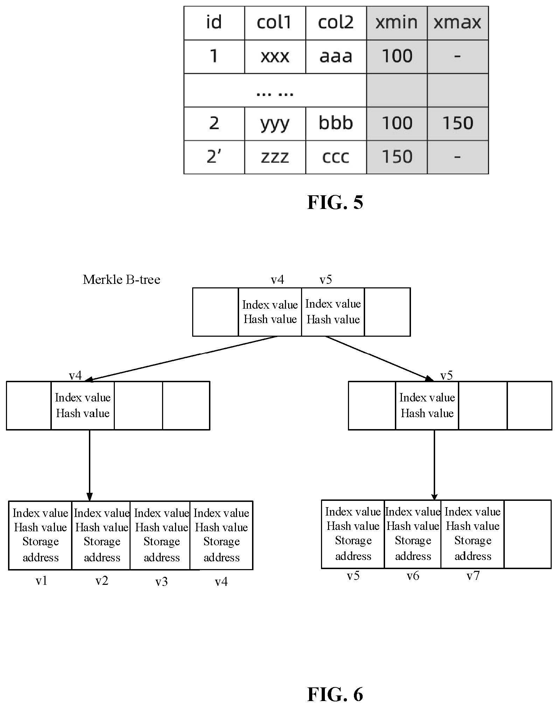

Each operation on the data table in the database has a corresponding transaction identifier, and different versions of the same tuple each have two fields, xmin (the minimum transaction identifier served) and xmax (the maximum transaction identifier served), to mark the transaction identifier range served by the tuple of that version. In one example, referring to FIG. 5, in a data table, a tuple with id being 2 is updated to produce an updated tuple with id being 2'. The update transaction ID is 150, so the xmax of the old data row (id=2) is set to 150, and the xmin of the new data row (id=2') is set to 150. Operations with transaction identifiers in [100, 150) may access the data row with id=2; operations with transaction IDs greater than or equal to 150 may access the data row with id=2'.

To adapt a verification structure to the MVCC mechanism, each data table in the database corresponds to at least one version of a verification structure, and different versions of the verification structure serve different transaction identifier ranges. After the server responds to the log meeting the update condition, batch-updates the hash values of the tuples recorded in the log into the tree, and releases the storage space corresponding to the log, the server obtains the updated tree and the updated log in which the recorded hash values are updated into the tree, and then determines the updated tree and the updated log as the latest version of the verification structure; and determines the transaction identifier range served by the latest version of the verification structure according to the transaction identifier ranges served by the tuples corresponding to the leaf nodes in the updated tree. By determining the transaction identifier range served by the latest version of the verification structure, this embodiment clarifies the transaction identifier ranges served by the different versions of the verification structure, so that in subsequent query processes, data verification can be accurately performed by using the verification results of the corresponding version.

Referring to FIG. 4, for example, the verification structure before the update as shown in FIG. 4 is a first version of the verification structure. After the hash values in the log in the verification structure shown in FIG. 4 are updated into the tree, the updated verification structure may be determined as a second version of the verification structure. The transaction identifier ranges served by the two versions of the verification structure are different. Taking the tuple with id being 2 in FIG. 5 as an example, assuming that the first version of the verification structure is used to perform data verification on the tuple with id being 2, and the served transaction identifier range is [100, 150); the second version of the verification structure is used to perform data verification on the tuple with id=2', and the served transaction identifier range is [150, +∞).

During data querying, in response to a query instruction from the second client for the data table in the database, the server first obtains the transaction identifier of the query transaction carried in the query instruction; and determines, according to the transaction identifier of the query transaction carried in the query instruction and the transaction identifier ranges served by different versions of the verification structure corresponding to the data table, a target verification structure for serving the query transaction to which the query instruction belongs. Then the server queries whether the log in the target verification structure records the hash value of the target tuple indicated by the query instruction; if yes, the hash value of the target tuple recorded in the log is returned to the second client, so that the second client performs data verification on the target tuple based on the hash value of the target tuple and the log stored locally at the second client; if not, the tree in the target verification structure is queried to determine the proof path of the leaf node corresponding to the target tuple in the tree, and the proof path is returned to the second client, so that the second client performs data verification based on the proof path and the root hash value stored locally at the second client. In this embodiment, by determining the target verification structure according to the transaction identifier of the query transaction, the verification structure serving the query transaction is directly located, thereby reducing unnecessary traversal and verification processes and improving query efficiency and response speed.

In some embodiments, the server may determine, in real time or periodically, the minimum transaction identifier among transactions currently being performed in the database, and then compare the minimum transaction identifier with the transaction identifier ranges served by different versions of the verification structure respectively, to determine, among the different versions of the verification structure, a to-be-deleted verification structure that satisfies a deletion condition and delete the to-be-deleted verification structure; where the deletion condition includes that the maximum transaction identifier served by the to-be-deleted verification structure is less than the minimum transaction identifier among the transactions currently being performed in the database. By deleting verification structures that are no longer in use, this embodiment achieves effective reclamation of verification structures, releases storage space, and improves the overall performance and efficiency of the database.

In some embodiments, to further improve the update and query performance of the database, the verification function and the indexing function are combined. The verification structure is further used for data indexing; each leaf node in the tree is further used to record an index value and a storage address of each tuple in the data table; each non-leaf node in the tree further records an index value of a tuple indicating a search order; and the log is further used to record an index value and a storage address of at least one tuple to be updated into the tree; where the index value of each tuple includes the primary key of the tuple or an attribute value of the tuple other than the primary key. Using the verification structure for data indexing in this embodiment may speed up queries. The tree in the verification structure may record the index values and storage addresses of the tuples, and through the search of the index values, the storage location of the target tuple can be quickly located, reducing the overhead of traversing the entire data table and improving query efficiency. Moreover, by recording the index values of the tuples in the non-leaf nodes, ordered access to the tuples can be achieved. In query or range search operations, traversal can be performed according to the order of the index values, reducing the number of disk I/O operations and improving data access efficiency. By using the verification structure for data indexing, the consistency and integrity of the index can also be ensured. During an update operation, the verification structure is updated first and then the data table is updated, which ensures the consistency of the index and data, avoids index corruption or data anomalies, and improves the reliability of the database.

Exemplarily, the tree in the verification structure includes a Merkle B-tree obtained by combining a Merkle tree structure and a B-tree structure. The Merkle B-tree combines the structures of the Merkle tree and the B-tree to achieve indexing and verification functions. In the Merkle B-tree, each leaf node stores the index value and the storage address of a tuple in the data table, and the hash value of the tuple data is computed. Non-leaf nodes store the index values of tuples indicating the search order, and the hash values of child nodes are computed. Through the hash value mechanism of the Merkle tree, the integrity and consistency of the data in the tree can be verified. The Merkle B-tree makes indexing and verification operations in the verification structure more efficient and reliable. It leverages the balance and multi-way search characteristics of the B-tree to reduce the number of disk I/O operations, and utilizes the hash value mechanism of the Merkle tree to ensure the integrity and consistency of the data, thereby improving the performance and efficiency of the verification structure while ensuring the security and reliability of the data.

In one example, referring to FIG. 6, a Merkle B-tree for data verification and indexing is shown. Assume that a data table exists, the data table comprising a total of 7 rows of records, namely v1, v2, v3, v4, v5, v6, and v7, that is, 7 tuples. Each leaf node in the Merkle B-tree records <index value, hash value, storage address of the tuple> respectively corresponding to v1 to v7. Non-leaf nodes of the Merkle B-tree record index values of tuples indicating the search order and hash values obtained by aggregating the hash values of their child nodes. For example, the index value corresponding to v4 in the root node indicates searching the left subtree for <index value, hash value, storage address of the tuple> corresponding to v1 to v4, and the index value corresponding to v5 in the root node indicates searching the right subtree for <index value, hash value, storage address of the tuple> corresponding to v5 to v7. The meanings indicated by the index values in the child nodes of the root node are similar and are not described in detail herein.

During data querying, in response to a query instruction from the second client for the data table in the database, the server queries, according to the index value of the target tuple carried in the query instruction, whether the log corresponding to the data table records the storage address and hash value of the target tuple. If yes, the target tuple is read from the storage address of the target tuple as recorded in the log, and the target tuple and the hash value of the target tuple as recorded in the log are returned to the second client. If not, the tree is queried to determine the leaf node corresponding to the target tuple, the target tuple is read from the storage address recorded in the leaf node corresponding to the target tuple, and a proof path is determined based on the leaf node corresponding to the target tuple. The target tuple and the proof path of the leaf node corresponding to the target tuple in the tree are returned to the second client. In this embodiment, by querying the storage address and hash value of the target tuple in the log, the target tuple can be quickly located and returned to the second client, thereby improving the speed and efficiency of the query. Moreover, by combining the indexing function and the verification function, the hash value for data verification can be obtained together when indexing the storage address of the target tuple, which helps improve the performance of update queries and data verification.

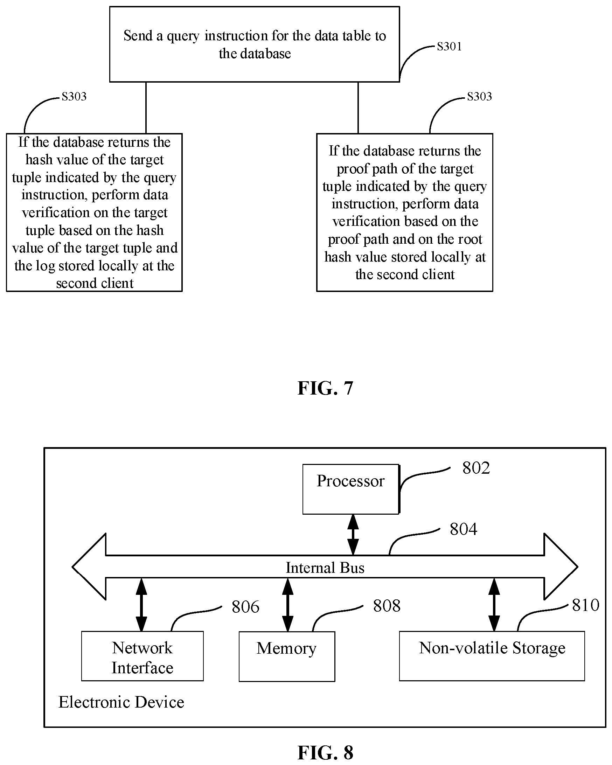

Correspondingly, referring to FIG. 7, an embodiment of the present disclosure further provides a data verification method based on a verification structure, applied to a second client. A verification credential held by the second client for performing data verification is obtained based on the method of updating the verification structure described above. The verification credential includes a root hash value and a log that correspond to a data table in a database, and the log records the hash value of at least one tuple in the data table. The method includes S301 to S303.

In S301, a query instruction for the data table is sent to the database.

In S302, if the database returns the hash value of the target tuple indicated by the query instruction, data verification is performed on the target tuple based on the hash value of the target tuple and the log stored locally at the second client.

In S303, if the database returns the proof path of the target tuple indicated by the query instruction, data verification is performed based on the proof path and on the root hash value stored locally at the second client.

In this embodiment, the second client holds the root hash value and the log as a verification credential, thereby performing data verification based on the root hash value and the log.

Exemplarily, when returning the hash value of the target tuple or the proof path corresponding to the target tuple, the server also returns the target tuple queried from the database.

When the server returns the target tuple and the hash value of the target tuple recorded in the log to the second client, the second client may query whether the hash value of the target tuple recorded in the log stored locally at the second client is consistent with the hash value of the target tuple returned by the server. If yes, the data verification passes, indicating that the target tuple returned together by the server is trustworthy and has not been modified; if not, the data verification does not pass, indicating that the target tuple returned together by the server has been modified.

When the server returns the target tuple and the proof path corresponding to the target tuple to the second client, the second client may compute a hash value based on the target tuple, and perform hash aggregation and backward deduction based on the computed hash value and the proof path to obtain a final computation result. If the final computation result is the same as the root hash value held by the client, the data verification passes, indicating that the target tuple returned together by the server is trustworthy and has not been modified; otherwise, the data verification does not pass, indicating that the target tuple returned together by the server has been modified.

The various technical features in the above embodiments can be combined arbitrarily, as long as there is no conflict or contradiction between the combined features. However, due to space limitations, not all combinations are described one by one. Therefore, any combination of the various technical features in the above embodiments also falls within the scope of the present disclosure.

In some embodiments, an embodiment of the present disclosure further provides an electronic device, comprising: a processor; and a memory configured to store instructions executable by the processor; where the processor implements the method described in any one of the above embodiments by executing the executable instructions.

Exemplarily, FIG. 8 is a schematic structural diagram of an electronic device provided by an exemplary embodiment. Referring to FIG. 8, at the hardware level, the device includes a processor 802, an internal bus 804, a network interface 806, a memory 808, and a non-volatile storage 810, and may of course also include hardware required by other scenarios. One or more embodiments of the present disclosure can be implemented in a software-based manner, for example, by the processor 802 reading a corresponding computer program from the non-volatile storage 810 into the memory 808 and then executing the computer program. Of course, in addition to the software-based implementation, the one or more embodiments of the present disclosure do not exclude other implementations, such as logic devices or a combination of software and hardware, that is to say, the execution entity of the following processing flow is not limited to individual logic units, and can also be hardware or logic devices.

In some embodiments, an embodiment of the present disclosure further provides a computer-readable storage medium having computer instructions stored thereon, wherein when the instructions are executed by a processor, the steps of the method according to any one of the above embodiments are implemented.

In some embodiments, an embodiment of the present disclosure further provides a computer program product comprising a computer program, where when the computer program is executed by a processor, the steps of the method according to any one of the above embodiments are implemented.

It should be noted that the user information (including but not limited to user device information, user personal information, etc.) and data (including but not limited to data used for analysis, stored data, displayed data, etc.) involved in the present disclosure are all information and data authorized by the user or fully authorized by all parties, and the collection, use, and processing of the relevant data need to comply with the relevant laws, regulations, and standards of the relevant countries and regions, and corresponding operation entries are provided for the user to choose to authorize or refuse.

The systems, apparatuses, modules, or units described in the above embodiments can be specifically implemented by computer chips or entities, or by products having certain functions. A typical implementation device is a computer, and the specific form of the computer can be a personal computer, a laptop computer, a cellular phone, a camera phone, a smart phone, a personal digital assistant, a media player, a navigation device, an email device, a game console, a tablet computer, a wearable device, or a combination of any of these devices.

In a typical configuration, the computer includes one or more processors (CPUs), input/output interfaces, network interfaces, and memory.

The memory may include non-permanent storage in computer-readable medium, random access memory (RAM), and/or non-volatile memory in forms such as read-only memory (ROM) or flash RAM. The memory is an example of a computer-readable medium.

Computer-readable media include permanent and non-permanent, removable and non-removable media, and information storage can be implemented by any method or technology. The information can be computer-readable instructions, data structures, program modules, or other data. Examples of computer storage media include, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic tape cassettes, magnetic disk storage, quantum memory, graphene-based storage media or other magnetic storage devices, or any other non-transitory medium that can be used to store information accessible by a computing device. As defined herein, computer-readable media do not include transitory media, such as modulated data signals and carrier waves.

It should also be noted that the terms "comprising", "including", or any other variations thereof are intended to cover non-exclusive inclusion, such that a process, method, article, or device that includes a list of elements includes not only those elements but also other elements not expressly listed, or also includes elements inherent to such a process, method, article, or device. Without further limitations, an element defined by the phrase "comprising a..." does not exclude the presence of additional identical elements in the process, method, article, or device that includes the element.

The foregoing describes specific embodiments of the present disclosure. Other embodiments are within the scope of the appended claims. In some cases, the actions or steps recited in the claims can be performed in an order different from that in the embodiments and still achieve desirable results. In addition, the processes depicted in the drawings do not necessarily require the particular order shown or sequential order to achieve desirable results. In certain implementations, multitasking and parallel processing are also possible or may be advantageous.

The terms used in the one or more embodiments of the present disclosure are for the purpose of describing particular embodiments only and are not intended to limit the one or more embodiments of the present disclosure. The singular forms "a", "an", and "the", used in the one or more embodiments of the present disclosure and the appended claims are also intended to include plural forms, unless the context clearly indicates otherwise. It should also be understood that the term "and/or" as used herein refers to and encompasses any or all possible combinations of one or more of the associated listed items.

It should be understood that although the terms first, second, third, etc. may be used in the one or more embodiments of the present disclosure to describe various information, such information should not be limited by these terms. These terms are only used to distinguish one type of information from another. For example, without departing from the scope of the one or more embodiments of the present disclosure, first information can also be referred to as second information, and similarly, second information can also be referred to as first information. Depending on the context, the word "if" as used herein can be interpreted as "at the time of ... ", "when ...", or "in response to determining ...".

The foregoing descriptions are merely preferred embodiments of the one or more embodiments of the present disclosure and are not intended to limit the one or more embodiments of the present disclosure. Any modifications, equivalent replacements, improvements, etc. made within the spirit and principles of the one or more embodiments of the present disclosure should be included within the protection scope of the one or more embodiments of the present disclosure.

## Claims

1. A method of updating a verification structure, the verification structure being used for performing data verification on a data table in a database; the verification structure comprising a tree and a log; each leaf node in the tree being used to record a hash value of each tuple in the data table, and a hash value recorded in each non-leaf node in the tree being obtained by aggregating hash values recorded in child nodes of the non-leaf node; wherein a root hash value recorded in a root node of the tree and the log are synchronized as a verification credential to a second client having a query requirement for the data table; the method comprising:
in response to an update instruction from a first client for a tuple in the data table, obtaining a hash value of the updated tuple, recording the hash value of the updated tuple in the log, and synchronizing the log to the second client having the query requirement for the data table; and
in response to the log meeting an update condition, updating, by using hash values of each tuple recorded in the log, leaf nodes corresponding to the tuples in the tree, and updating non-leaf nodes in the tree based on hash values recorded in the updated leaf nodes, to obtain an updated tree and an updated log in which the recorded hash values are updated into the tree, and synchronizing a root hash value recorded in a root node of the updated tree and the updated log to the second client having the query requirement for the data table.

2. The method of claim 1, wherein the log has a built-in Bloom filter;
after the recording the hash value of the updated tuple in the log, the method further comprising: updating the built-in Bloom filter by using the hash value of the updated tuple;
and/or
the update condition comprises: a number of hash values recorded in the log reaching a preset threshold.

3. The method of claim 1, wherein the updating, by using hash values of each tuple recorded in the log, leaf nodes corresponding to the tuples in the tree comprises:
in response to the log recording a plurality of hash values for a same tuple, updating the leaf node corresponding to the tuple in the tree by using a latest recorded hash value among the plurality of hash values.

4. The method of claim 1, wherein the database adopts a Multi-Version Concurrency Control, MVCC, mechanism to support transactions; each transaction corresponds to a unique transaction identifier, and the transactions comprise query transactions and update transactions, the update transactions comprise the update instruction;
wherein each tuple in the data table corresponds to at least one version, and each version has a transaction identifier range indicating transactions served by the tuple of the version, the transaction identifier range is determined according to transaction identifiers of both an update transaction that updates the tuple to the version and an update transaction that updates the tuple to a next version;
wherein the data table corresponds to at least one version of the verification structure, and different versions of the verification structure serve different transaction identifier ranges;
wherein before synchronizing the root hash value recorded in the root node of the updated tree and the updated log to the second client having the query requirement for the data table, the method further comprising:
determining the updated tree and the updated log as a latest version of the verification structure; and
determining the transaction identifier range served by the latest version of the verification structure according to the transaction identifier ranges served by the tuples corresponding to each leaf node in the updated tree.

5. The method of claim 4, further comprising:
determining a minimum transaction identifier among transactions currently being performed in the database; and
comparing the minimum transaction identifier with transaction identifier ranges served by different versions of the verification structure respectively, to determine, among the different versions of the verification structure, a to-be-deleted verification structure that satisfies a deletion condition and delete the to-be-deleted verification structure; wherein the deletion condition comprises a maximum transaction identifier served by the to-be-deleted verification structure being less than the minimum transaction identifier.

6. The method of claim 1, wherein the verification structure is further used for data indexing; each leaf node in the tree is further used to record an index value and a storage address of each tuple in the data table; each non-leaf node in the tree further records an index value of a tuple indicating a search order; and the log is further used to record an index value and a storage address of at least one tuple to be updated into the tree; and
wherein the index value of each tuple comprises a primary key of the tuple or an attribute value of the tuple other than the primary key.

7. A data verification method based on a verification structure, the verification structure being obtained based on the method of updating the verification structure according to any one of claims 1 to 6; the method comprising:
in response to a query instruction from a second client for a data table in a database, querying whether a log corresponding to the data table records a hash value of a target tuple indicated by the query instruction;
if yes, returning the hash value of the target tuple recorded in the log to the second client, so that the second client performs data verification on the target tuple based on the hash value of the target tuple and the log stored locally at the second client; and
if not, querying a tree corresponding to the data table, determining a proof path of a leaf node corresponding to the target tuple in the tree, and returning the proof path to the second client, so that the second client performs data verification based on the proof path and a root hash value stored locally at the second client.

8. The method of claim 7, wherein the log has a built-in Bloom filter;
the querying whether a log corresponding to the data table records a hash value of a target tuple indicated by the query instruction comprises:
querying, by using the built-in Bloom filter in the log, whether the hash value of the target tuple is recorded in the log;
if the built-in Bloom filter indicates that the hash value of the target tuple is not recorded in the log, performing a step of querying the tree; and
otherwise, traversing all hash values recorded in the log until the hash value of the target tuple is found.

9. The method of claim 7, wherein the database adopts a Multi-Version Concurrency Control, MVCC, mechanism to support transactions; each transaction corresponds to a unique transaction identifier, and the transactions comprise query transactions and update transactions, the query transactions comprises the query instruction;
before the querying whether a log corresponding to the data table records a hash value of a target tuple indicated by the query instruction, the method further comprising:
obtaining the transaction identifier of the query transaction carried in the query instruction; and
determining, according to the transaction identifier of the query transaction carried in the query instruction and transaction identifier ranges served by different versions of the verification structure corresponding to the data table, a target verification structure for serving the query transaction to which the query instruction belongs;
the querying whether a log corresponding to the data table records a hash value of a target tuple indicated by the query instruction comprises:
querying whether the log in the target verification structure records the hash value of the target tuple indicated by the query instruction; and
the querying a tree corresponding to the data table comprises:
querying the tree in the target verification structure.

10. The method of claim 7, wherein the verification structure is further used for data indexing;
the querying whether a log corresponding to the data table records a hash value of a target tuple indicated by the query instruction comprises:
querying, according to an index value of the target tuple carried in the query instruction, whether the log corresponding to the data table records a storage address and a hash value of the target tuple;
the method further comprising:
if yes, reading the target tuple from the storage address of the target tuple recorded in the log, and returning the target tuple and the hash value of the target tuple recorded in the log to the second client; and
if not, querying the tree to determine a leaf node corresponding to the target tuple, reading the target tuple from a storage address recorded in the leaf node corresponding to the target tuple, and returning the target tuple and a proof path of the leaf node corresponding to the target tuple in the tree to the second client.

11. A data verification method based on a verification structure, applied to a second client, a verification credential held by the second client being obtained based on the method of updating the verification structure according to any one of claims 1 to 6, the verification credential comprising a root hash value and a log corresponding to a data table in a database, the log recording a hash value of at least one tuple in the data table;
the method comprising:
sending a query instruction for the data table to the database;
in response to the database returning a hash value of a target tuple indicated by the query instruction, performing data verification on the target tuple based on the hash value of the target tuple and the log stored locally at the second client; and
in response to the database returning a proof path of the target tuple indicated by the query instruction, performing data verification based on the proof path and the root hash value stored locally at the second client.

12. An electronic device, comprising:
a processor;
a memory configured to store instructions executable by the processor;
wherein the processor is configured to execute the instructions to implement the method according to any one of claims 1 to 11.

13. A computer-readable storage medium having computer instructions stored thereon, wherein when the instructions are executed by a processor, steps of the method according to any one of claims 1 to 11 are implemented.

14. A computer program product comprising a computer program, wherein when the computer program is executed by a processor, steps of the method according to any one of claims 1 to 11 are implemented.
